(19) Europäisches Patentamt
European Patent Office
Office européen des brevets

(11) **EP 4 296 228 A1**

(12) **EUROPEAN PATENT APPLICATION**
published in accordance with Art. 153(4) EPC

(43) Date of publication:
**27.12.2023 Bulletin 2023/52**

(21) Application number: **21926811.7**

(22) Date of filing: **22.12.2021**

(51) International Patent Classification (IPC):
***C01B 33/18*** *(2006.01)*    ***C01B 33/12*** *(2006.01)*
***G03G 9/097*** *(2006.01)*

(52) Cooperative Patent Classification (CPC):
**C01B 33/12; C01B 33/18; G03G 9/097**

(86) International application number:
**PCT/JP2021/047691**

(87) International publication number:
**WO 2022/176388 (25.08.2022 Gazette 2022/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.02.2021 JP 2021024701**

(71) Applicant: **SHIN-ETSU CHEMICAL CO., LTD.
Tokyo 1000005 (JP)**

(72) Inventors:
• **MATSUMURA Kazuyuki
Annaka-shi, Gunma 379-0224 (JP)**

• **NISHIMINE Masanobu
Annaka-shi, Gunma 379-0195 (JP)**
• **ITOH Yusuke
Annaka-shi, Gunma 379-0195 (JP)**
• **YAGI Hisashi
Annaka-shi, Gunma 379-0195 (JP)**
• **NAKAMURA Tsutomu
Tokyo 100-0005 (JP)**
• **SAKATSUME Yoshiteru
Tokyo 100-0005 (JP)**

(74) Representative: **Sonnenhauser, Thomas Martin
Wuesthoff & Wuesthoff
Patentanwälte PartG mbB
Schweigerstraße 2
81541 München (DE)**

(54) **METHOD FOR MANUFACTURING SURFACE-TREATED VAPOR PHASE SILICA PARTICLES, SURFACE-TREATED VAPOR PHASE SILICA PARTICLES, AND EXTERNAL ADDITIVE FOR TONER FOR ELECTROSTATIC CHARGE IMAGE DEVELOPMENT**

(57) The present invention is a method for manufacturing a surface-treated gas-phase-process silica particle, the method including steps of: (A1): adding 1,3-divinyl-1,1,3,3-tetramethyldisilazane to a raw material gas-phase-process silica particle and introducing a vinyldimethylsilyl group on a surface of the raw material gas-phase-process silica particle to obtain a preliminarily treated silica particle; and (A2): adding hexamethyldisilazane to the preliminarily treated silica particle and introducing a trimethylsilyl group on a surface of the preliminarily treated silica particle to obtain a surface-treated gas-phase-process silica particle. This provides: a surface-treated gas-phase-process silica particle that contains few coarsely aggregated particles and that can impart good flowability when added into a toner; a manufacturing method therefor; and an external additive for a toner including the surface-treated gas-phase-process silica particle.

EP 4 296 228 A1

**Description**

TECHNICAL FIELD

The present invention relates to a surface-treated gas-phase-process silica particle, a manufacturing method therefor, and a toner external additive for electrostatic charge image development used for developing an electrostatic charge image in an electrophotographing method, an electrostatic recording method, etc.

BACKGROUND ART

Dry developers used in an electrophotographing method, etc. can be classified into: a single-component developer using a toner itself in which a colorant is dispersed in a binder resin; and a two-component developer in which a carrier is mixed with the toner. When copying is performed by using these developers, the developer needs to have excellent flowability, caking resistance, fixability, charging property, cleanability, etc. in order to have process compatibility. In particular, to improve the flowability, the caking resistance, the fixability, and the cleanability, an inorganic fine particle is often used as a toner external additive.

However, dispersibility of the inorganic fine particle significantly affects the toner characteristics. Ununiform dispersibility may fail to yield desired characteristics of flowability, caking resistance, and fixability, or may cause insufficient cleanability and generate toner adhesion, etc. on a photoreceptor, which may be a cause of generation of a black-spot-like image defect. For a purpose of improving these points, various inorganic fine particles having a hydrophobized surface are proposed.

Among the inorganic fine particles used for such uses, gas-phase-process silica is known to have excellent functions as the toner external additive because of its small primary particle diameter and control of its charging property by a surface treatment (Patent Documents 1, 2, and 3).

However, although having the small primary particle diameter, the gas-phase-process silica easily aggregates, and a diameter of the aggregated particle may be typically from 10 um to 200 um or even larger. Such an aggregated particle is loosened with receiving strong frictional force to be dispersed in the toner in a dispersing step into the toner, but silica forming a large aggregate has poor dispersibility in the toner. Such aggregated particles present in the toner may degrade flowability or cause falling from the toner, which causes problems of generating a white spot in a printed image, etc.

From such a viewpoint, proposed is a method for crushing and classifying the aggregated particles generated after the hydrophobizing treatment and using only the fine particles thereof (Patent Document 4). However, this method is not favorable because the crushing and classifying as above have poor manufacturing efficiency and is costly.

CITATION LIST

PATENT LITERATURE

Patent Document 1: JP 2004-145325 A
Patent Document 2: JP 2006-99006 A
Patent Document 3: JP 2007-34224 A
Patent Document 4: JP 2010-085837 A

SUMMARY OF INVENTION

TECHNICAL PROBLEM

The present invention has been made in view of the aforementioned circumstances. An object of the present invention is to provide: a surface-treated gas-phase-process silica particle that contains few coarsely aggregated particles and that can impart good flowability when added into a toner; a manufacturing method therefor; and an external additive for a toner containing the surface-treated gas-phase-process silica particle.

SOLUTION TO PROBLEM

To solve the above problem, the present invention provides a method for manufacturing a surface-treated gas-phase-process silica particle, the method comprising steps of:

(A1): adding 1,3-divinyl-1,1,3,3-tetramethyldisilazane to a raw material gas-phase-process silica particle and introducing a vinyldimethylsilyl group on a surface of the raw material gas-phase-process silica particle to obtain a preliminarily treated silica particle; and

(A2): adding hexamethyldisilazane to the preliminarily treated silica particle and introducing a trimethylsilyl group on a surface of the preliminarily treated silica particle to obtain a surface-treated gas-phase-process silica particle.

Such a method for manufacturing a surface-treated gas-phase-process silica particle can manufacture the surface-treated gas-phase-process silica particle that contains few coarsely aggregated particles and that can impart good flowability when added into a toner.

A BET specific surface area of the raw material gas-phase-process silica particle is preferably 40 to 400 $m^2$/g.

Such a raw material gas-phase-process silica particle has excellent dispersibility and hardly aggregates during the surface treatment with the silazane compound.

In the step (A1), an amount (g) of the added 1,3-divinyl-1,1,3,3-tetramethyldisilazane is preferably an amount represented by

```
{an amount (g) of the raw material gas-phase-
process silica particle used in the step (A1) × a BET
specific surface area (m2/g) of the raw material gas-
phase-process silica particle} / B (B represents a
number of 5,000 to 100,000).
```

Such a range of the amount of added 1,3-divinyl-1,1,3,3-tetramethyldisilazane is preferable in terms of the cost, and can improve efficiency of the hydrophobizing treatment with hexamethyldisilazane in the step (A2).

In the step (A2), an amount (g) of the added hexamethyldisilazane is preferably an amount represented by

```
{an amount (g) of the preliminarily treated silica
particle used in the step (A2) × a BET specific surface
area (m2/g) of the raw material gas-phase-process silica
particle} / C (C represents a number of 150 to 3,000).
```

Such a range of the amount of added hexamethyldisilazane can inhibit generation of aggregates during the reaction, and can further increase the hydrophobicity degree of the silica particle.

The present invention also provides a surface-treated gas-phase-process silica particle, comprising a gas-phase-process silica particle having a surface treated with 1,3-divinyl-1,1,3,3-tetramethyldisilazane and hexamethyldisilazane, wherein

a BET specific surface area of the surface-treated gas-phase-process silica particle is 30 $m^2$/g or more and less than 400 $m^2$/g,

a proportion of particles with 1.5 um or more in the surface-treated gas-phase-process silica particle is less than 10%, the proportion being determined from a particle size distribution on a volumetric basis by a laser diffraction method,

a hydrophobicity degree with methanol of the surface-treated gas-phase-process silica particle is 68% or more and 78% or less, and

when 1 part by mass of the surface-treated gas-phase-process silica particle and 100 parts by mass of a polyester resin particle having a volumetric median diameter of 5 to 8 um are mixed to form a mixture, an aggregation degree of the mixture is to be 20% or less.

The present invention can achieve the surface-treated gas-phase-process silica particle having such characteristics.

The present invention also provides a toner external additive for electrostatic charge image development comprising the above surface-treated gas-phase-process silica particle.

The inventive surface-treated gas-phase-process silica particle can impart good flowability and printing characteristics to a toner when used as the toner external additive.

ADVANTAGEOUS EFFECTS OF INVENTION

As described above, the present invention can provide: a surface-treated gas-phase-process silica particle that can improve defects in a printed image and low toner flowability that are caused by using a conventional fumed silica with a small particle diameter as an external additive; a toner for electrostatic development using the same; and a toner external additive for electrostatic development using the same.

DESCRIPTION OF EMBODIMENTS

As noted above, there have been demands for the developments of an external additive for a toner containing a surface-treated gas-phase-process silica particle that contains few aggregated particles and that can impart good flowability when added into a toner.

The present inventors have made earnest study to achieve the above object, and consequently found that a surface-treated gas-phase-process silica particle that contains few aggregates, that has excellent dispersibility even when added into a toner, and that causes no defect in a printed image can be obtained by surface-treating a gas-phase-process silica particle with vinyltetramethyldisilazane and hexamethyldisilazane.

Specifically, the present invention is a method for manufacturing a surface-treated gas-phase-process silica particle, the method comprising steps of:

(A1): adding 1,3-divinyl-1,1,3,3-tetramethyldisilazane to a raw material gas-phase-process silica particle and introducing a vinyldimethylsilyl group on a surface of the raw material gas-phase-process silica particle to obtain a preliminarily treated silica particle; and

(A2): adding hexamethyldisilazane to the preliminarily treated silica particle and introducing a trimethylsilyl group on a surface of the preliminarily treated silica particle to obtain a surface-treated gas-phase-process silica particle.

Hereinafter, the present invention will be described in detail, but the present invention is not limited thereto.

(Raw Material Gas-Phase-Process Silica Particle)

The gas-phase-process silica particle (gas-phase-process silica fine particle) used as a raw material in the present invention is also called "dry-method silica", and is not particularly limited as long as it is manufactured by flame hydrolysis of a silicon compound, oxidation with a combustion-in-flame method, or a combination of these reactions. In particular, a gas-phase-process silica particle manufactured by a flame hydrolysis method is preferably used. Examples of commercially available products thereof include "AEROSIL", manufactured by NIPPON AEROSIL CO., LTD. or Evonik Degussa GmbH; "CAB-O-SIL", manufactured by Cabot Corporation; "HDK", manufactured by Wacker Asahikasei Silicone Co., Ltd.; and "REOLOSIL", manufactured by Tokuyama Corporation.

A method for manufacturing a gas-phase-process silica particle by the flame hydrolysis is a method of, for example, introducing a gas of a raw material silicon compound such as silicon tetrachloride together with an inert gas into a mixing chamber of a combustion burner, mixing the gasses with hydrogen and air to form a mixed gas at a predetermined ratio, burning this mixed gas in a reaction chamber at a temperature of 1,000 to 3,000°C to generate silica, and after cooling, collecting the generated silica with a filter.

Examples of the silicon compound used as the raw material of the gas-phase-process silica particle include various inorganic silicon compounds and organic silicon compounds. Examples thereof include: inorganic silicon compounds, such as silicon tetrachloride, silicon trichloride, and silicon dichloride; and organic silicon compounds, such as siloxanes such as hexamethylcyclotrisiloxane, octamethylcyclotetrasiloxane, decamethylcyclopentasiloxane, hexamethyldisiloxane, and octamethyltrisiloxane, alkoxysilanes such as methyltrimethoxysilane, tetramethoxysilane, ethyltrimethoxysilane, n-propyltrimethoxysilane, methyltributoxysilane, diethyldipropoxysilane, and trimethylbutoxysilane, tetramethylsilane, diethylsilane, hexamethyldisilazane, and an oligomer and polymer thereof.

The hydrolysis and combustion decomposition of such silicon compounds in flame can be performed, after purifying this silicon compound by distillation etc. as necessary, by introducing the silicon compound into flame such as oxyhydrogen flame to be reacted in this flame by: a stream-entraining method in which the silica compound is heated and evaporated to entrain a stream of an inert gas such as nitrogen gas; or a method in which the silicon compound is atomized to be supplied into flame. In this case, a combustible gas such as hydrogen gas and methane gas may be used as an auxiliary combustion gas. This auxiliary combustion gas may be any as long as it yields no residue, and is not particularly limited. The silica generated by the hydrolysis or combustion decomposition of these silicon compounds is collected by a known method such as a bag filter and a cyclone.

The raw material gas-phase-process silica particle in the present invention preferably has a BET specific surface area of 40 to 400 $m^2/g$. Such a range yields excellent dispersibility, and hardly causes aggregation during a surface treatment with a silazane compound, described below.

One kind of the raw material gas-phase-process silica particle may be used, or two or more kinds thereof may be used in mixture.

(Method for Manufacturing Surface-Treated Gas-Phase-Process Silica Particle)

The inventive method for manufacturing a surface-treated gas-phase-process silica particle includes the following step (A1) and step (A2).

Step (A1): A step of introducing a vinyldimethylsilyl unit on the silica surface.
Step (A2): A step of introducing a trimethylsilyl unit on the silica surface.

Step (A1): Step of Introducing Vinyldimethylsilyl Unit on Silica Surface

The step (A1) is a step of adding 1,3-divinyl-1,1,3,3-tetramethyldisilazane (hereinafter, described as "divinyltetramethyldisilazane") to the raw material gas-phase-process silica particle and introducing the vinyldimethylsilyl group on the surface of the raw material gas-phase-process silica particle to obtain a preliminarily treated silica particle. This step allows the surface treatment in the following step (A2) to proceed more uniformly at high degree.

As the raw material gas-phase-process silica particle, the aforementioned gas-phase-process silica particle can be used.

For the surface treatment method for the raw material gas-phase-process silica particle with divinyltetramethyldisilazane in the step (A1), a dry method and a wet method, which are used for a surface treatment of a common powder, can be used. The dry method is preferably used in terms of productivity. As a method for adding divinyltetramethyldisilazane in the dry method, divinyltetramethyldisilazane can be dropped, sprayed with a spray, etc. with stirring the raw material gas-phase-process silica particle in a reaction container. Divinyltetramethyldisilazane may be used as it is, or may be diluted with a solvent such as toluene, xylene, and hexane to use.

When the raw material gas-phase-process silica particle is subjected to the surface treatment, water is preferably contained on the silica surface in advance because the efficiency of the surface treatment is improved in this manner. In this case, the silica is preferably stirred for approximately 0.5 hours to 2.0 hours after adding water.

Methods for adding water include a method of dropping or spraying water with stirring the raw material gas-phase-process silica particle in the reaction container, or alternatively, water may be added as steam.

An amount of the added water relative to the raw material gas-phase-process silica particle is preferably an amount calculated by the following formula.

The amount (g) of the added water = {an amount (g) of the raw material gas-phase-process silica particle used in the step (A1) $\times$ a BET specific surface area ($m^2/g$) of the raw material gas-phase-process silica particle} / A

In the calculation formula, A preferably represents a number of 300 to 200,000, and more preferably a number of 500 to 2,500. A of 300 or more is preferable because aggregation of the raw material gas-phase-process silica particle due to water can be inhibited. A of 200,000 or less is preferable because reactivity with the silazane compound can be more increased.

An amount of the added divinyltetramethyldisilazane relative to the raw material gas-phase-process silica particle is preferably an amount calculated by the following formula.

The amount (g) of the added divinyltetramethyldisilazane = {an amount (g) of the raw material gas-phase-process silica particle used in the step (A1) $\times$ a BET specific surface area ($m^2/g$) of the raw material gas-phase-process silica particle} / B

In the calculation formula, B preferably represents a number of 5,000 to 100,000, and more preferably a number of 10,000 to 80,000. B of 5,000 or more is preferable in terms of the cost. B of 100,000 or less is preferable because efficiency of the hydrophobizing treatment with hexamethyldisilazane in the step (A2) can be increased.

For the reaction between the raw material gas-phase-process silica particle and divinyltetramethyldisilazane in the step (A1), common conditions for a surface treatment of silica with a silazane compound can be applied. Although the reaction also proceeds at room temperature, the mixture is preferably stirred at 50 to 70°C for 0.5 hours to 3 hours to promote the reaction after divinyltetramethyldisilazane is added.

Step (A2): Step of Introducing Trimethylsilyl Unit on Silica Surface

The step (A2) is a step of adding hexamethyldisilazane to the preliminarily treated silica particle obtained in the step (A1) and introducing the trimethylsilyl group on a surface of the preliminarily treated silica particle to obtain a hydrophobized surface-treated gas-phase-process silica particle.

For the surface treatment method for the preliminarily treated silica particle with hexamethyldisilazane in the step (A2), a dry method and a wet method, which are used for a surface treatment of a common powder, can be used. The dry method is preferably used in terms of productivity. As a method for adding hexamethyldisilazane in the dry method, hexamethyldisilazane can be dropped, sprayed with a spray, etc. with stirring the preliminarily treated silica particle in a reaction container. Hexamethyldisilazane may be used as it is, or may be diluted with a solvent such as toluene, xylene, hexane, etc. to use.

As in the step (A1), the silica surface preferably contains water in the step (A2) as well because in this manner, the efficiency of the surface treatment is increased. Although adding water in the step (A1) as above is sufficient, water may be additionally added in the step (A2).

An amount of the added hexamethyldisilazane relative to the preliminarily treated silica particle is preferably an amount calculated by the following formula.

The amount (g) of the added hexamethyldisilazane = {an amount (g) of the preliminarily treated silica particle used in the step (A2) $\times$ a BET specific surface area ($m^2/g$) of the raw material gas-phase-process silica particle} / C

In the calculation formula, C preferably represents a number of 150 to 3,000, and more preferably a number of 200 to 1,000. C of 150 or more can inhibit generation of aggregates during the reaction. C of 3,000 or less can further increase the hydrophobicity degree of the silica particle.

For the reaction between the preliminarily treated silica particle and hexamethyldisilazane in the step (A2), common conditions for a surface treatment of silica with a silazane compound can be applied. Although the reaction also proceeds at room temperature, the mixture is preferably stirred at 50 to 100°C for 0.5 hours to 3 hours to promote the reaction after hexamethyldisilazane is added.

Step (A3): Step of Drying Surface-Treated Gas-Phase-Process Silica Particle

In the inventive method for manufacturing a surface-treated gas-phase-process silica particle, the surface-treated gas-phase-process silica particle itself can be dried with air, allowed to be cooled, etc. after the step (A2), but the inventive method preferably further includes a step (A3): a step of drying the surface-treated gas-phase-process silica particle. The drying conditions are not particularly limited, but the silica particle is preferably dried at 140°C to 250°C for approximately 0.5 hours to 3 hours under a nitrogen flow.

(Surface-Treated Gas-Phase-Process Silica Particle)

The surface-treated gas-phase-process silica particle obtained by the inventive method for manufacturing a surface-treated gas-phase-process silica particle is a surface-treated gas-phase-process silica particle, containing a gas-phase-process silica particle having a surface treated with 1,3-divinyl-1,1,3,3-tetramethyldisilazane and hexamethyldisilazane, where

(1) a BET specific surface area of the surface-treated gas-phase-process silica particle is 30 $m^2/g$ or more and less than 400 $m^2/g$,

(2) a proportion of particles with 1.5 um or more in the surface-treated gas-phase-process silica particle is less than 10%, the proportion being determined from a particle size distribution on a volumetric basis by a laser diffraction method,

(3) a hydrophobicity degree with methanol of the surface-treated gas-phase-process silica particle is 68% or more and 78% or less, and

(4) when 1 part by mass of the surface-treated gas-phase-process silica particle and 100 parts by mass of a polyester resin particle having a volumetric median diameter of 5 to 8 um are mixed to form a mixture, an aggregation degree of the mixture is to be 20% or less.

The combination of the above physical properties (1) to (4) imparts good flowability and printing characteristics to a toner when the silica particle is used as a toner external additive.

(1) BET Specific Surface Area

The BET specific surface area depends on a primary particle diameter, and specifically, is preferably 40 to 200

$m^2/g$. If the BET specific surface area is less than 30 $m^2/g$, the dispersibility in the toner is poor and the effect of improving the flowability is degraded when the silica particle is added into the toner as a toner external additive for electrostatic charge image development. If the BET specific surface area is 400 $m^2/g$ or more, the silica particles easily aggregate.

(2) Proportion of Aggregated Particles

The particle size distribution on a volumetric basis by a laser diffraction method may be a particle size distribution of a 0.5 mass% dispersion of the surface-treated gas-phase-process silica particle in methanol (dispersed by ultrasonic irradiation with an output of 30 W/L for 10 minutes) on a volumetric basis by a laser diffraction method. A proportion of the particles with 1.5 um or more of 10% or more, which means there are many large aggregated particles, causes poor dispersibility in the toner, and poor flowability of the toner and printed image quality when the silica particle is added into the toner as a toner external additive for electrostatic charge image development. This proportion is more preferably 8% or less, and particularly preferably 5% or less.

(3) Hydrophobicity Degree with Methanol

If the hydrophobicity degree with methanol of the surface-treated gas-phase-process silica particle is less than 68%, the silica particles easily aggregate due to remaining silanol groups on the silica surfaces, which causes poor dispersibility in the toner, and poor flowability of the toner and printed image quality when the silica particle is added into the toner as a toner external additive for electrostatic charge image development. If the hydrophobicity degree with methanol is more than 78%, a charge amount of the toner may be excessively high when the silica particle is added into the toner. The hydrophobicity degree with methanol in the present invention refers to a value measured under the following conditions.

<Method for Measuring Hydrophobicity Degree with Methanol>

Into 60 ml of an aqueous solution of methanol at a volume concentration of 50% (temperature: 25°C), 0.2 g of the surface-treated gas-phase-process silica particle is added, and the mixture is stirred with a stirrer. Then, with dropping methanol into the liquid in which the silica particles float on the surface, the aqueous solution of methanol is irradiated with light at a wavelength of 780 nm to measure a transmittance. Specified as the hydrophobicity degree with methanol is a volume concentration (%) of methanol in an aqueous solution of methanol at a time where the spherical silica particles are suspended or precipitated and the transmittance is 80%.

(4) Toner Aggregation Degree

The aggregation degree of the mixture of the polyester resin particle and the surface-treated gas-phase-process silica particle represents aggregation in a toner when the silica particles are dispersed in the toner. A smaller value of the aggregation degree means a smaller amount of aggregates in the toner, which can be evaluated to be good.
If the aggregation degree of the mixture of 100 parts by mass of the polyester resin particle having a volumetric median diameter of 5 to 8 um and 1 part by mass of the surface-treated gas-phase-process silica particle is more than 20%, many aggregates are generated due to the toner bonding to each other and the toner flowability is degraded when the surface-treated gas-phase-process silica particle is added into the toner as the toner external additive for electrostatic charge image development. The aggregation degree is preferably 10% or less. The aggregation degree in the present invention refers to a value measured under the following condition.

<Method for Measuring Aggregation Degree>

By using 2 g of a mixture of 1 part by mass of the surface-treated gas-phase-process silica particle relative to 100 parts by mass of the polyester resin particle having a volumetric median diameter by a laser diffraction / scattering method of 5 to 8 um mixed with a mixer, the mixture is vibrated using sieves having an aperture of 150 um, 75 $\mu$m, and 45 um from the upper side with a vibration width of 1 mm and a vibration frequency of 1 Hz for 60 seconds. After the vibration, amounts of the mixture remaining on the sieves are measured to calculate the aggregation degree with the following formula.

$$\text{Aggregation Degree (\%)} = (W_1 + 0.6 \times W_2 + 0.2 \times W_3) \ / \ 2 \ \times \ 100$$

$W_1$: A remaining amount (g) on the sieve having an aperture of 150 $\mu$m.

$W_2$: A remaining amount (g) on the sieve having an aperture of 75 μm.
$W_3$: A remaining amount (g) on the sieve having an aperture of 45 μm.

(Toner External Additive for Electrostatic Charge Image Development)

The present invention also provides a toner external additive for electrostatic charge image development containing the above surface-treated gas-phase-process silica particle. The inventive surface-treated gas-phase-process silica particle can impart good flowability and printing characteristics to the toner when used as the toner external additive.

EXAMPLE

Hereinafter, the present invention will be specifically described by using Examples and Comparative Examples, but the present invention is not limited thereto.

(Manufacture of Surface-Treated Gas-Phase-Process Silica Particle)

Example 1-1

Into a 5-L reaction apparatus equipped with a stirrer, a spraying apparatus, and a thermometer, 240 g of a gas-phase-process silica particle having a BET specific surface area of 50 $m^2$/g was fed. After air in the reaction apparatus was substituted with dry nitrogen, 18 g of water was sprayed with the spraying apparatus with stirring. After the mixture was stirred at 25°C for 1 hour, 0.6 g of divinyltetramethyldisilazane was sprayed, and the mixture was stirred at 60°C for 1 hour. The mixture was once cooled to 25°C, and then 60 g of hexamethyldisilazane was sprayed. The mixture was stirred at 60°C for 1 hour, and then further dried at 150°C for 3 hours with stirring under a nitrogen flow. This mixture was cooled to obtain 243 g of a white powder of a surface-treated gas-phase-process silica particle (I).

Example 1-2

In the same manner as in Example 1-1 except that the amount of the added divinyltetramethyldisilazane was 1.2 g, 244 g of a white powder of a surface-treated gas-phase-process silica particle (II) was obtained.

Example 1-3

In the same manner as in Example 1-1 except that a gas-phase-process silica particle having a BET specific surface area of 90 $m^2$/g was used instead of the gas-phase-process silica particle having a BET specific surface area of 50 $m^2$/g, 242 g of a white powder of a surface-treated gas-phase-process silica particle (III) was obtained.

Example 1-4

Into a 5-L reaction apparatus equipped with a stirrer, a spraying apparatus, and a thermometer, 148 g of a gas-phase-process silica fine particle having a BET specific surface area of 130 $m^2$/g was fed. After air in the reaction apparatus was substituted with dry nitrogen, 13 g of water was sprayed with the spraying apparatus with stirring. After the mixture was stirred at 25°C for 1 hour, 0.4 g of divinyltetramethyldisilazane was sprayed, and the mixture was stirred at 60°C for 1 hour. The mixture was once cooled to 25°C, and then 60 g of hexamethyldisilazane was sprayed. The mixture was stirred at 60°C for 1 hour, and then further dried at 150°C for 3 hours with stirring under a nitrogen flow. This mixture was cooled to obtain 51 g of a white powder of a surface-treated gas-phase-process silica particle (IV).

Example 1-5

In the same manner as in Example 1-4 except that a gas-phase-process silica fine particle having a BET specific surface area of 200 $m^2$/g was used instead of the gas-phase-process silica fine particle having a BET specific surface area of 130 $m^2$/g, 153 g of a white powder of a surface-treated gas-phase-process silica particle (V) was obtained.

Comparative Example 1-1

Into a 5-L reaction apparatus equipped with a stirrer, a spraying apparatus, and a thermometer, 240 g of a gas-phase-process silica particle having a BET specific surface area of 50 $m^2$/g was fed. After air in the reaction apparatus was substituted with dry nitrogen, 18 g of water was sprayed with the spraying apparatus with stirring. After the mixture was stirred at 25°C for 1 hour, 60 g of hexamethyldisilazane was sprayed. The mixture was stirred at 60°C for 1 hour, and then further dried at 150°C for 3 hours with stirring under a nitrogen flow. This mixture was cooled to obtain 243 g of a white powder of a surface-treated gas-phase-process silica particle (VI).

Comparative Example 1-2

Into a 5-L reaction apparatus equipped with a stirrer, a spraying apparatus, and a thermometer, 148 g of a gas-phase-process silica fine particle having a BET specific surface area of 130 $m^2/g$ was fed. After air in the reaction apparatus was substituted with dry nitrogen, 13 g of water was sprayed with the spraying apparatus with stirring. After the mixture was stirred at 25°C for 1 hour, 60 g of hexamethyldisilazane was sprayed. The mixture was stirred at 60°C for 1 hour, and then further dried at 150°C for 3 hours with stirring under a nitrogen flow. This mixture was cooled to obtain 51 g of a white powder of a surface-treated gas-phase-process silica particle (VII).

Comparative Example 1-3

Into a 5-L reaction apparatus equipped with a stirrer, a spraying apparatus, and a thermometer, 240 g of a gas-phase-process silica particle having a BET specific surface area of 50 $m^2/g$ was fed. After air in the reaction apparatus was substituted with dry nitrogen, 18 g of water was sprayed with the spraying apparatus with stirring. After the mixture was stirred at 25°C for 1 hour, 60 g of divinyltetramethyldisilazane was sprayed. The mixture was stirred at 60°C for 1 hour, and then further dried at 150°C for 3 hours with stirring under a nitrogen flow. This mixture was cooled to obtain 247 g of a white powder of a surface-treated gas-phase-process silica particle (VIII).

The surface-treated gas-phase-process silica particles (I) to (VIII) obtained in the above steps were measured in accordance with the following measurement methods (1) to (4). Table 1 shows the measurement results.

Measurement Methods

(1) BET Specific Surface Area

By using a fully automatic BET specific surface area measuring apparatus (Macsorb HM model-1201, manufactured by MOUNTECH Co., Ltd.), the BET specific surface area was measured by a BET 1-point method using nitrogen.

(2) Proportion of Aggregated Particles

Into a vial, 0.1 g of the surface-treated gas-phase-process silica particle and 19.9 g of methanol were added, the vial was placed in an ultrasonic-wave washing apparatus and irradiated with ultrasonic wave with an output of 30 W/L for 10 minutes to disperse the silica particles in methanol. A particle size distribution on a volumetric basis of the particles in the dispersion was measured by using a laser diffraction / scattering-type particle size distribution measuring apparatus (LA-950V2, manufactured by HORIBA, Ltd.), and based on the particle size distribution, the proportion of the aggregated particles having a particle diameter of 1.5 um or more was calculated.

(3) Hydrophobicity Degree with Methanol

By using a powder wettability tester (WET101P, manufactured by RHESCA Co., LTD.), 0.2 g of the surface-treated gas-phase-process silica particle was added into 60 ml of an aqueous solution of methanol at a volume concentration of 50% (temperature: 25°C), and the mixture was stirred with a stirrer. Then, with dropping methanol into the liquid in which the silica particles floated on the surface, the aqueous solution of methanol was irradiated with light at a wavelength of 780 nm to measure a transmittance. Specified as the hydrophobicity degree with methanol was a volume concentration (%) of methanol in an aqueous solution of methanol at a time where the spherical silica particles were suspended or precipitated and the transmittance was 80%.

(4) Toner Aggregation Degree

1 part by mass of the surface-treated gas-phase-process silica particle to 100 parts by mass of the polyester resin particle having a volumetric median diameter by a laser diffraction / scattering method of 5 to 8 um was mixed with a mixer. By using a powder characteristic evaluating apparatus (Powder Tester PT-X, manufactured by HOSOKAWA MICRON CORPORATION), 2 g of the mixture was vibrated using sieves having an aperture of 150 um, 75 $\mu$m, and 45 um from the upper side with a vibration width of 1 mm and a vibration frequency of 1 Hz for 60 seconds. After the vibration, amounts of the mixture remaining on the sieves were measured to calculate the aggregation degree with the following

formula.

$$\text{Aggregation Degree (\%)} = (W_1 + 0.6 \times W_2 + 0.2 \times W_3) / 2 \times 100$$

$W_1$: A remaining amount (g) on the sieve having an aperture of 150 $\mu$m.

$W_2$: A remaining amount (g) on the sieve having an aperture of 75 $\mu$m.

$W_3$: A remaining amount (g) on the sieve having an aperture of 45 $\mu$m.

[Table 1]

|  | Surface-treated gas-phase-process silica particle | (1) BET specific surface area (m²/g) | (2) Proportion of aggregated particles (%) | (3) Hydrophobicity degree with methanol (%) | (4) Toner aggregation degree (%) |
|---|---|---|---|---|---|
| Ex. 1-1 | (I) | 44 | 5.0 | 72 | 18 |
| Ex. 1-2 | (II) | 45 | 4.5 | 74 | 15 |
| Ex. 1-3 | (III) | 86 | 7.1 | 74 | 14 |
| Ex. 1-4 | (IV) | 125 | 8.0 | 75 | 10 |
| Ex. 1-5 | (V) | 194 | 8.2 | 77 | 9 |
| Comp. Ex. 1-1 | (VI) | 43 | 17.5 | 60 | 25 |
| Comp. Ex. 1-2 | (VII) | 124 | 26.3 | 63 | 28 |
| Comp. Ex. 1-3 | (VIII) | 41 | 19.8 | 61 | 30 |

As shown in Table 1, the surface-treated gas-phase-process silica particles obtained in Examples 1-1 to 1-5 had a small proportion of the aggregated silica particles, sufficient hydrophobicity degree with methanol, and in addition, a small toner aggregation degree. Meanwhile, the surface-treated gas-phase-process silica particles obtained in Comparative Examples 1-1 and 1-2, where the surface treatment with divinyltetramethyldisilazane was not performed, and in Comparative Example 1-3, where the surface treatment with hexamethyldisilazane was not performed, exhibited much aggregation of the silica particles with each other, low hydrophobicity degree with methanol, and high aggregation degree when added into the toner.

(Manufacture of External Additive-Mixed Toner and Two-Component Developer)

Examples 2-1 to 2-5 and Comparative Examples 2-1 to 2-3

Melt-kneading 96 parts by weight of a polyester resin having Tg of 60°C and a softening point of 110°C and 4 parts by weight of CARMNINE 6BC (manufactured by SUMIKA COLOR CO., LTD.) as a colorant was performed, and the mixture was crushed and classified to obtain a toner having a volumetric median diameter of 7 um. Mixing 10 g of this toner and 0.2 g of one of the surface-treated gas-phase-process silica particles obtained in Examples 1-1 to 1-5 and Comparative Examples 1-1 to 1-3 was performed with a sample mill to obtain an external additive-mixed toner.
Mixing 3 parts by mass of the external additive-mixed toner and 97 parts by mass of Standard Ferrite L (The Imaging Society of Japan) being a carrier was performed to prepare a two-component developer. The two-component developer obtained in the above steps was measured in accordance with the following methods (5) to (9). Table 2 show the results.

(5) Charge Amount of Toner

The two-component developer was exposed for one day to each condition of high-temperature and high-humidity (30°C, 90% RH), medium-temperature and medium-humidity (25°C, 55% RH), and low-temperature and low-humidity (10°C, 15% RH). Then, each of the samples was frictionally charged under the same conditions, and a charge amount in this time was measured by using a blowoff powder charge amount measuring apparatus (TB-200, manufactured by Toshiba Chemical Corp.).

(6) Adhesion of Toner to Photoreceptor

The two-component developer was added into a developing apparatus equipped with an organic photoreceptor, and a printing test with 30,000 sheets was performed under an environment at 25°C and 50% RH. In this time, adhesion of the toner to the photoreceptor can be detected as a void in a full solid image. Here, a degree of the voids was evaluated as follows: 10 or more voids per cm$^2$ was evaluated as "many", 1 to 9 voids was evaluated as "few", and 0 voids was evaluated as "none".

(7) Photoreceptor Wearing

In the printing test in the above (6), photoreceptor wearing detected as disorder of the image was evaluated with the following criteria.

A: There is no disorder of the image.
B: There is no large disorder of the image.
C: There is disorder of the image.

(8) Evaluation of Image Defect (White Spot)

The two-component developer was exposed for one day to an environment at 30°C and 90% RH, then 5,000 sheets were continuously printed with solid printing (image density: 100%) with 20 cm square, and thereafter, the two-component developer was left to stand again under the environment at 30°C and 90% RH. This was repeated 60 times to print a total of 300,000 sheets. The 10th print in the first day was specified as a print 1, and the last print in the last day was specified as a print 2.
Presence or absence of an image defect (white spot) in the print 2 obtained above was evaluated with image observation by the following criteria.

A: There is no image defect (no white spot) with visual observation.
B: There are 1 to 4 white spots (image with particulate voids) with visual observation.
C: There are 5 to 9 white spots with visual observation.
D: There are 10 or more white spots with visual observation.

(9) Evaluation of Change in Density (ΔE)

A change in density of the print 2 relative to the print 1 was evaluated under the following criteria by measuring a color difference (ΔE) in a color space CIE1976 (L*a*b*) by using a reflective densitometer X-rite938 (manufactured by X-Rite, Incorporated.) in accordance with JIS Z 8781-5.

A: ΔE was less than 1.
B: ΔE was 1 or more and less than 2.5.
C: ΔE was 2.5 or more and less than 3.0.
D: ΔE was 3.0 or more.

[Table 2]

| | Surface-treated gas-phase-process silica particle | (5) Toner charge amount ($\mu$C/g) | | | (6) Adhesion of toner to photoreceptor | (7) Photoreceptor wearing | (8) Image defect | (9) Change in density ($\Delta E$) |
|---|---|---|---|---|---|---|---|---|
| | | 30°C, 90% RH | 25°C, 55% RH | 10°C, 15% RH | | | | |
| Ex. 2-1 | (I) | -34 | -42 | -48 | None | A | A | A |
| Ex. 2-2 | (II) | -37 | -44 | -50 | None | A | A | A |
| Ex. 2-3 | (III) | -43 | -48 | -54 | None | A | A | A |
| Ex. 2-4 | (IV) | -45 | -51 | -59 | None | A | A | A |
| Ex. 2-5 | (V) | -48 | -56 | -60 | None | A | A | A |
| Comp. Ex. 2-1 | (VI) | -23 | -40 | -55 | Few | B | C | C |
| Comp. Ex. 2-2 | (VII) | -21 | -49 | -54 | Few | B | D | D |
| Comp. Ex. 2-3 | (VIII) | -23 | -43 | -52 | Few | B | C | C |

As shown in Table 2, the two-component developers in which the surface-treated gas-phase-process silica particles obtained in Examples 1-1 to 1-5 were used as the toner external additive exhibited no defect in the printed image. Meanwhile, those using the surface-treated gas-phase-process silica particles obtained in Comparative Examples 1-1 to 1-3 had large variation of the toner charge amount due to the environment, and had poor printing characteristics.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

**Claims**

1. A method for manufacturing a surface-treated gas-phase-process silica particle, the method comprising steps of:

(A1): adding 1,3-divinyl-1,1,3,3-tetramethyldisilazane to a raw material gas-phase-process silica particle and introducing a vinyldimethylsilyl group on a surface of the raw material gas-phase-process silica particle to obtain a preliminarily treated silica particle; and
(A2): adding hexamethyldisilazane to the preliminarily treated silica particle and introducing a trimethylsilyl group on a surface of the preliminarily treated silica particle to obtain a surface-treated gas-phase-process silica particle.

2. The method for manufacturing a surface-treated gas-phase-process silica particle according to claim 1, wherein a BET specific surface area of the raw material gas-phase-process silica particle is 40 to 400 m$^2$/g.

3. The method for manufacturing a surface-treated gas-phase-process silica particle according to claim 1 or 2, wherein in the step (A1), an amount (g) of the added 1,3-divinyl-1,1,3,3-tetramethyldisilazane is an amount represented by

```
     {an amount (g) of the raw material gas-phase-
process silica particle used in the step (A1) × a BET
specific surface area (m²/g) of the raw material gas-
phase-process silica particle} / B (B represents a
number of 5,000 to 100,000).
```

4. The method for manufacturing a surface-treated gas-phase-process silica particle according to any one of claims 1 to 3, wherein in the step (A2), an amount (g) of the added hexamethyldisilazane is an amount represented by

```
{an amount (g) of the preliminarily treated silica
particle used in the step (A2) × a BET specific surface
area (m²/g) of the raw material gas-phase-process silica
particle} / C (C represents a number of 150 to 3,000).
```

5. A surface-treated gas-phase-process silica particle, comprising a gas-phase-process silica particle having a surface treated with 1,3-divinyl-1,1,3,3-tetramethyldisilazane and hexamethyldisilazane, wherein

a BET specific surface area of the surface-treated gas-phase-process silica particle is 30 m²/g or more and less than 400 m²/g,
a proportion of particles with 1.5 um or more in the surface-treated gas-phase-process silica particle is less than 10%, the proportion being determined from a particle size distribution on a volumetric basis by a laser diffraction method,
a hydrophobicity degree with methanol of the surface-treated gas-phase-process silica particle is 68% or more and 78% or less, and
when 1 part by mass of the surface-treated gas-phase-process silica particle and 100 parts by mass of a polyester resin particle having a volumetric median diameter of 5 to 8 um are mixed to form a mixture, an aggregation degree of the mixture is to be 20% or less.

6. A toner external additive for electrostatic charge image development, comprising the surface-treated gas-phase-process silica particle according to claim 5.

| INTERNATIONAL SEARCH REPORT | International application No. |
|---|---|
| | **PCT/JP2021/047691** |

**A. CLASSIFICATION OF SUBJECT MATTER**

*C01B 33/18*(2006.01)i; *C01B 33/12*(2006.01)i; *G03G 9/097*(2006.01)i
FI: C01B33/18 C; G03G9/097 375; G03G9/097 371; C01B33/12 E

According to International Patent Classification (IPC) or to both national classification and IPC

**B. FIELDS SEARCHED**

Minimum documentation searched (classification system followed by classification symbols)

C01B33/18; C01B33/12; G03G9/097

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2010-528134 A (EVONIK DEGUSSA GMBH) 19 August 2010 (2010-08-19) | 1-5 |
| Y | claim 1, paragraphs [0017], [0023], table 1, example 1, tables 2-3 | 6 |
| Y | JP 2014-201461 A (TOKUYAMA CORP) 27 October 2014 (2014-10-27) claims, paragraphs [0019], [0056]-[0059], [0066] | 6 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 February 2022** | **08 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/047691**

| Patent document cited in search report | | | Publication date (day/month/year) | Patent family member(s) | | | Publication date (day/month/year) |
|---|---|---|---|---|---|---|---|
| JP | 2010-528134 | A | 19 August 2010 | US claim 1, paragraphs [0014]-[0020], table 1, example 1, tables 2-3<br>WO<br>EP | 2010/0137485<br><br><br>2008/141929<br>2158282 | A1<br><br><br>A1<br>A1 | |
| JP | 2014-201461 | A | 27 October 2014 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004145325 A
- JP 2006099006 A
- JP 2007034224 A
- JP 2010085837 A